Europäisches Patentamt

European Patent Office

Office européen des brevets

(11) Publication number: **0 073 086**

**A1**

# (12) EUROPEAN PATENT APPLICATION

(21) Application number: **82201039.3**

(22) Date of filing: **18.08.82**

(51) Int. Cl.³: **H 04 N 1/028**

(30) Priority: **24.08.81 NL 8103918**

(43) Date of publication of application:
**02.03.83 Bulletin 83/9**

(84) Designated Contracting States:
**DE FR GB NL**

(71) Applicant: Océ-Nederland B.V.
St. Urbanusweg 102
NL-5914 CC Venlo(NL)

(72) Inventor: Vetjens, Marinus J. P.
Suurhofstrasse 23
Helmond(NL)

(74) Representative: Bleukx, Lucas Lodewijk Maria,
Ir. et al,
Océ-Nederland B.V. Patents & Information Dept.
Postbus 101
NL-5900 MA Venlo(NL)

(54) A system for converting the image information on an original into an electrical signal.

(57) The system comprises a light-transmission means for collecting and directing light to a foto-electric detector, which light emanates from a light beam scanning an original line-wise and which light is reflected by the original.

The light-transmission means consists of a light-transmitting body defined by two specular surfaces parallel to the line to be scanned and extending to the detector and by two specular side surfaces near the ends of the line to be scanned and perpendicular thereto. An internal reflection of said surfaces can be obtained by polishing the body at those places.

The light that would reach the detector by direct reflection at the surface of the original is eliminated by bringing about light polarisation effects, e.g. by using polarized light or by providing polarization filters in the path of light.

FIG. 4

## A system for converting the image information on an original into an electrical signal

This invention relates to a system for converting the image information on an original into an electrical signal, comprising means for scanning the original linewise by means of a light beam, a detector which detects the light reflected by the original and delivers the electrical signal, and a light-transmission means comprising: an entry surface extending along a line to be scanned by the light beam, two parallel specular surfaces extending from the entry surface to the detector and which face one another and which are substantially parallel to the line to be scanned by the light beam, and two side surfaces which define the space between the entry surface, the parallel specular surfaces  and the detector in the lateral direction. A system of this kind is known in practice.

In practice, a light beam is delivered from a light source, such as a laser, in the line scanner, and is fed via one or more lenses, one or more mirrors, and a scanner, e.g. a galvanoscanner, to the original to be scanned. The light beam is focussed to the required size by means of one of the lenses, and  then the originals can be scanned with this beam. The light from the beam is reflected to a greater or lesser extent in the scanning area of the surface of the original, depending upon the information present there, and is collected in the light-transmission  means or collector and then fed to a detector. The large parallel surfaces of this  so-called collector are frequently polished in order internally to reflect the light that meets these surfaces at an angle greater than the critical angle.

In practice it has been found that the configuration and finish of the plane light-transmission means are very important to the obtaining of an optimum detection signal at the light detector.

Thus the magnitude of the detected signal obtained at the detector depends both upon the distance between the original and the detector, i.e. inversely proportional, and upon the angle between the connecting line between the detector and the light spot on the original and the main direction of viewing of the detector, i.e. "inversely" proportional. The detector signal mentioned is required to satisfy the following requirements:

1. The signal must be the maximum possible signal, i.e. have a high signal-to-noise ratio and

2. The signal must be independent of the angle defined hereinbefore.

In order to be able to satisfy the first requirement, the distance between the original and the detector must be as small as possible. To be able to satisfy the second requirement, the distance between the original and the detector must be as large as possible. It is therefore not possible to satisfy both requirements simultaneously: either there is a large distance in order to satisfy the second requirement, in which case the signal is small, or else there is a small distance to satisfy the first requirement, in which case the maximum angle is so large that there is a considerable difference in signal magnitude between the middle and the ends of the scanning line.

The object of the invention is to obviate these problems and provide a system having a configuration and finish such that it is possible to use a small distance between the original and the detector and yet obtain a signal which is independent of the angle.

To this end, according to the invention, in a system of the kind referred to in the outset, the light-transmission means is so constructed that the side surfaces near the entry surface are substantially perpendicular to the connecting line between the ends of the line to be scanned and are specular on the facing sides at least near the entry surfaces.

This embodiment according to the invention gives a very good light-transmission to the detector with an optimum intensity profile at the said detector. The term "optimum" denotes a profile which is as high and rectangular as possible.

Generally, the height of the light intensity profile at the detector is also determined by the number of reflections of the light beam in the wide main surfaces.

The more mirror images can be detected by the detector, the higher the intensity profile that is obtained. These reflections make a greater contribution to the intensity profile than the amount of extra light collected if the collector plate is made thicker.

In one advantageous embodiment according to the invention, in which the main surfaces are polished, the dimensions are so selected as to produce a relatively long plate, e.g. 210 x 300 x 6 mm, and the narrow side surfaces are polished over a small distance from the entry surface, giving a straight intensity profile without fluctuations.

In another advantageous embodiment according to the invention, in which the main surfaces are polished, the dimensions are so selected as to produce a relatively short plate, e.g. 210 x 200 x 6 mm, and the narrow side surfaces are fully polished, giving a higher and not completely straight intensity profile with some fluctuations.

The entry surface can also be so hollowed out that the light beams meet the medium interface perpendicularly so that the reflections at the entry surface are restricted to a minimum. The exit surface can also be made to give a white diffuse reflection until around the detector so that a uniform intensity profile rise is obtained for the light.

The invention will be explained with reference to the drawings in which

Fig. 1 is a schematic arrangement of the system according to the invention,

Fig. 2a, 2b and 2c are diagrams of intensity profiles of different collectors,

Fig. 3 shows how the entry surface of the collector can be finished for optimum entry of the reflected beams,

Fig. 4 shows how the collector can be constructed and fixed, and

Fig. 5 shows the use of a polarization filter in the path of the light beam in order to eliminate specular reflections.

The system arrangement can be such that a light beam is delivered from a laser to a drum via a lens system, a mirror and a galvanoscanner. The original 6 to be reproduced is wound on the drum. The light reflected by the original is collected by the light-transmission means or collector and fed on to a detector. The collector may be suspended in a carriage so adapted to traverse an angle that the collector-drum distance does not change. The object of the lens system is to focus the laser beam on the drum. The detector may be a UDT600, the signal of which is amplified by a linear amplifier, e.g. of type 46J. The bandwidth of this detector-amplifier system is $\pm$ 750 kHz with an amplification factor of $\pm$ 10 000. If desired a stepping motor can be used to rotate the drum. The speed and also the resolving power are of minor significance within the framework of the invention.

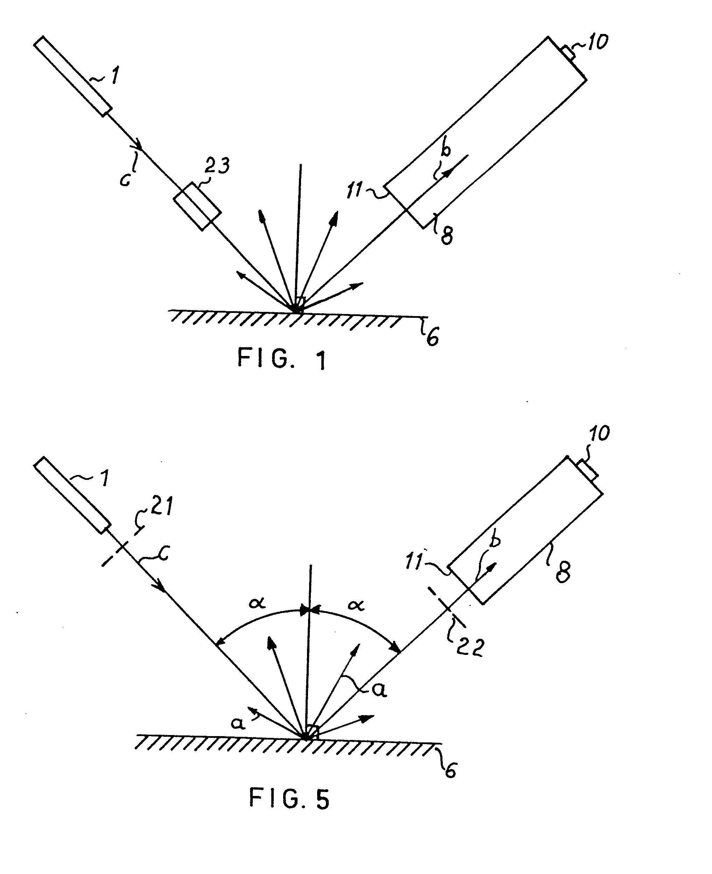

Fig. 1 shows in a more schematical way how the light beam c from the light source 1 is directed towards the original 6 at an angle with regard to the normal.

Reference 23 denotes a polygonal mirror, which may be a rotating octagonal mirror, by means of which the scanning of the line to be scanned on the original is obtained. The light beam b obtained after diffuse reflection is collected by the collector 8 via the entry surface 11 and fed to the detector 10. The collector body may advantageously be made of transparent material.

As stated before, the level of the intensity profile of the light at the detector is determined greatly by the number of reflections of the light beam in the wide main surfaces. The more mirror images can be detected by detector, the higher the total intensity delivered. These reflections make a greater contribution to the intensity profile that the amount of "more" light collected by making the entry surface or window thicker, and this applies given the same distance from the original. A thin plate, e.g. a 6 mm plate, accordingly delivers 180% more signal than a 22 mm thick plate. The length of both plates is 297 mm in these conditions. As usual, the broad main surfaces can be completely or partially polished.

To obtain an optimum intensity profile, it is very important to select the correct plate configuration in combination with a specific distance over which the narrow side surfaces are polished from the entry surface. A specific plate configuration according to the invention will be selected dependent upon the question how sensitive the information is to be detected and whether or not, and in the affirmative case to what extent, grey shades are to be detected.

It has been found that the amplification of the electronic system can be kept low with a maximum light intensity on the detector, and this gives a high bandwidth.

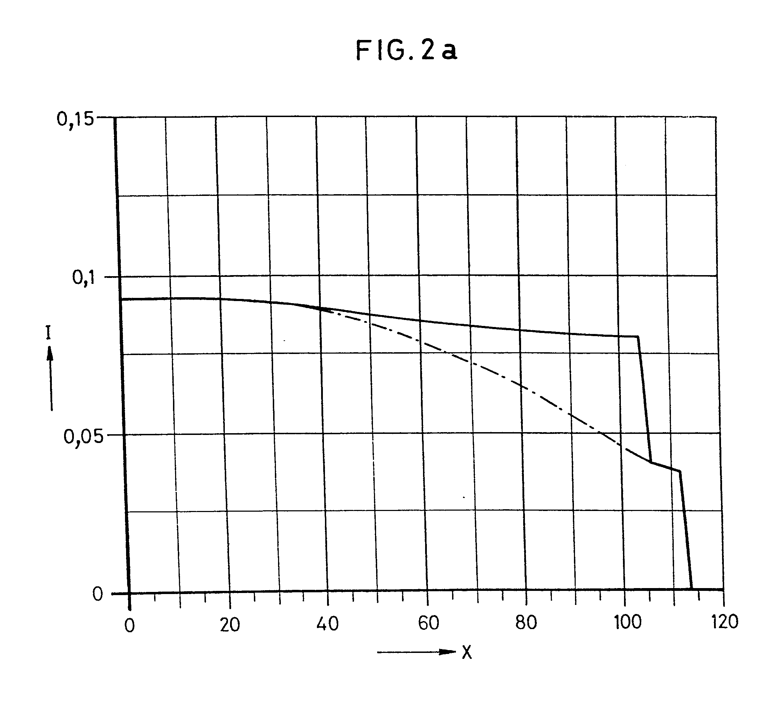

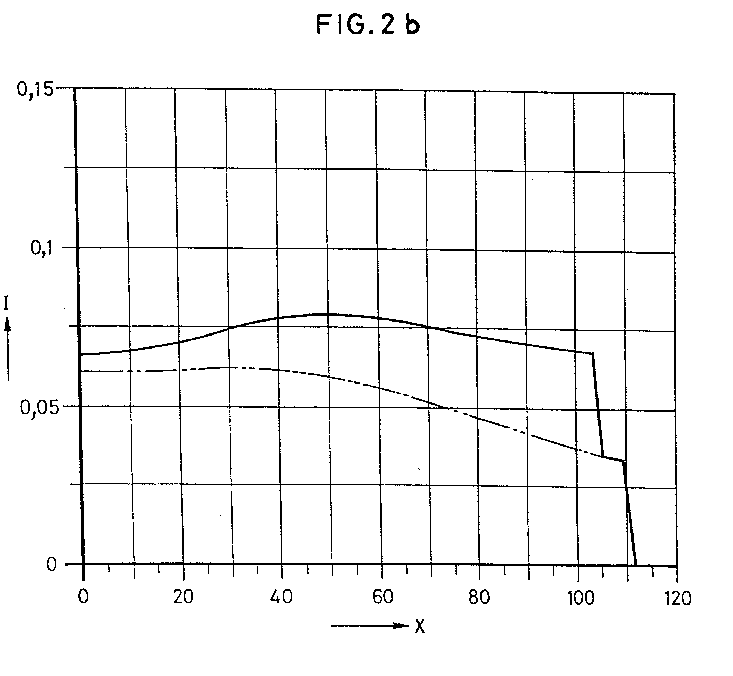

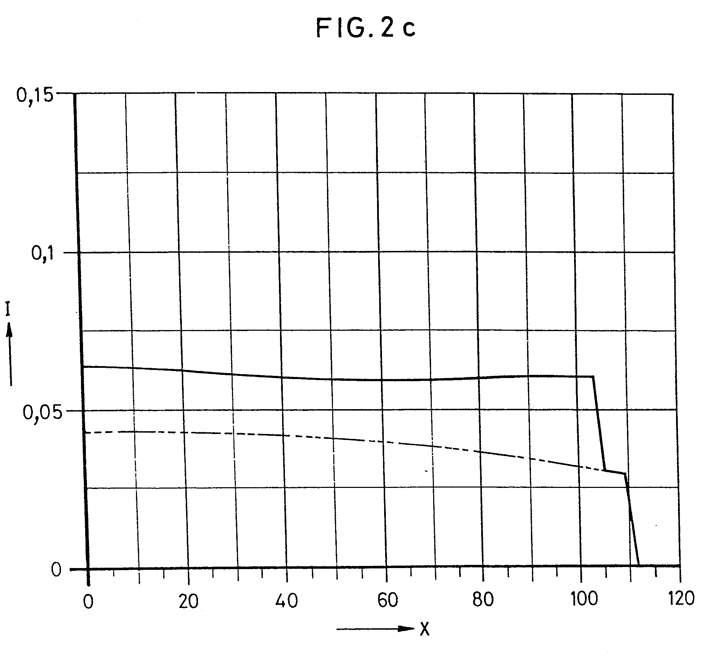

In the Figs. 2a,2b and 2c the intensity profiles at the detector are compared with each other using plates with different configurations. The intensity I has been plotted to the distance X (in mm) from the middle of the scanned line to the edge. The solid lines indicate that the narrow side surfaces of the plates are polished and the broken lines indicate that the narrow side surfaces of the plates are not polished. Fig. 2a indicates the profile values of a collector of a length of 200 mm, Fig. 2b indicates the profile values of a collector of a length of 250 mm and Fig. 2c indicates the profile values of a collector of a length of 300 mm. In all these collectors the side surfaces near the entry surface are substantially perpendicular to the connecting line between the ends of the line to be scanned.

The difference in the intensity profile between the collector having fully polished narrow side surfaces and the collector without polished narrow side surfaces will be clearly seen.

The plate configuration and finish will be selected in dependence on the conditions:
- how sensitive the information is to be detected and
- whether or not grey shades are to be detected and, if so, to what extent.

To obtain maximum light intensity at the detector, a relatively short collector will be selected, e.g. 210 x 200 x 6 mm, the narrow side surfaces of which are fully polished (and of course the wide main surfaces). The reflecting side surfaces raise the profile at the edges so that it is substantially straight, possibly with some fluctuations. A longer collector, e.g. 210 x 300 x 6 mm will be selected for maximum detection of grey gradations, the narrow side surfaces being polished only over a few mm from the entry surface. This gives a somewhat lower but still reasonable intensity profile without any fluctuations. The signal processing must satisfy somewhat higher requirements in view of the somewhat lower signal.

In the above cases relating to the scanning of an original, the length of the entry surfaces (or the width of the collector at the scanning line side) is advantageously made equal to the length of the scanning line. Advantageously, the exit surface can be made to give a white diffuse reflection until around the place where the detector is situated. The beams which otherwise leave the plate will be arbitrarily sent towards the plate by the reflection surfaces provided, so that a uniform 10% rise in the intensity profile is obtained.

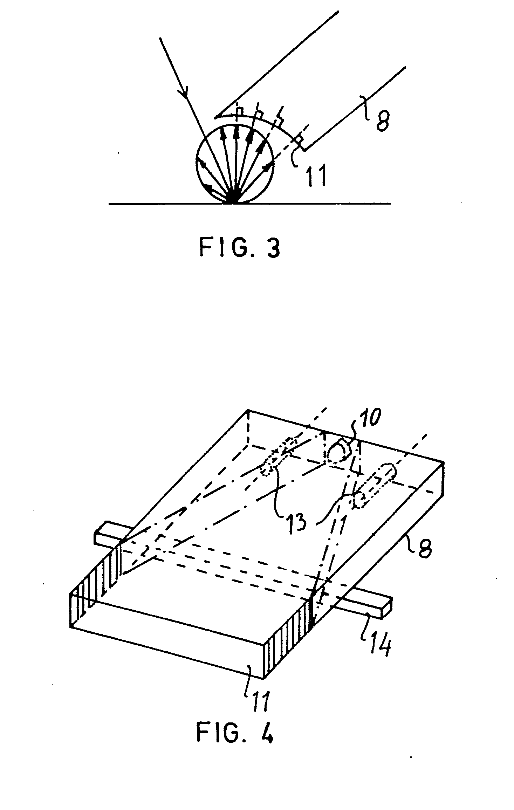

Fig. 3 shows how the entry surface or window 11 of the collector 8 can be hollowed out. As a result, the reflected beams originating from the incident light beam on the original 6 can enter the medium interface perpendicularly so that the reflections at the entry surface 11 are restricted to a minimum.

It is also important so to fix the collector that the fixing does not affect the signal transmission.

Certain conditions, e.g. contact with the collector near the entry surface, have distinct consequences on the intensity profile. The profile is also adversely affected by contamination. Fig. 4 shows how the collector 8 can be fixed, e.g. near the detector 10 (not in the direct angle of view) by means of two mortices 13 and be supported in the middle by a bar 14. In these conditions the collector must be supported over the entire width in order to ensure that any effect on the intensity profile is made uniform. In case only a small part of the narrow side surfaces has to be polished, the remainder can, if required, be bevelled in the way as shown in broken lines in Fig. 4.

Fig. 5 shows how the elimination of specular reflections upon scanning originals is effected by using polarization effects near the collector. The light reflected by the original generally consists of two components, i.e. the specular component b and the diffuse components a. The specular component may cause problems if it is directly incident to the collector entry surface. The light then incident to the detector installed at the other side of the collector has a relatively high intensity. The result is that the detector becomes saturated with consequent loss of information. This specular component can be eliminated in two ways.

The first way: The light beam c from the light source 1, while being linearly polarized in a plane perpendicular to the scanning line by the polarization filter 21, is directed on to the original 6 at the Brewster angle $\alpha$ with respect to the normal to said original. The diffusely reflected light will be arbitrarily polarized during the reflection process. The direction of polarization parallel to the scanning line of the diffuse component a will remain unaffected and reach the detector. The specular component b, on the other hand, will be completely or substantially completely attenuated depending upon the original.

This is due to the essential difference between diffuse reflection and specular reflection and the regularity of the Brewster angle.

Second way: Without being polarized the laser light beam c is directed on to the original 6 at the Brewster angle $\alpha$ with respect to the normal .

The reflected light is collected at the entry surface 11 via a polarizing filter 22. In this way only the component originating from the diffuse reflection can reach the detector.

In either case care must be taken to ensure that during detection there is no component present which is polarized parallel to the scanning line. The detected quantity of light will be the greatest in the first case.

---------------

CLAIMS

1.    A system for converting the image information on an original into an electrical signal, comprising means for scanning the original line-wise by means of a light beam, a detector which detects the light reflected  by the original and delivers the electrical signal, and a light-transmission means comprising: an entry surface extending along a line to be scanned by the light beam, two parallel  specular surfaces extending from the entry surface to the detector and which  face one another and which are substantially parallel to the line to be scanned by the light beam, and two side surfaces which define the space between the entry surface, the parallel specular surfaces and the detector in the lateral direction, characterised in that, the light-transmission means (8) is so constructed that the side surfaces near the entry surface (11) are substantially perpendicular to the connecting line between the ends of the line  to be scanned  and are specular on the facing sides at least near the entry surface (11).

2.    A system according to claim 1, in which the light-transmission means comprising the said surfaces and entry surface forms a light-transmitting body, characterised in that  the light-transmitting body (8) is of transparent material.

3.    A system according to claim 1 or 2, characterised in that the side surfaces of the light-transmission means (8) are fully polished.

4.    A system according to any of the preceding claims, characterised in that the entry surface (11) is so hollowed out that the light beams meet the medium interface perpendicularly, so that the reflections at the entry surface (11) are restricted to a minimum.

5.    A system according to any of the preceding claims, characterised in that  the light beam directed on to the original (6) consists of light polarized linearly in a plane perpendicular to the scanning line.

6.    A system according to claim 5, characterised in that a polarization filter (21) is provided in the path of the light between the light source (1) and the original (6).

7.    A system according to any of claims 1 to 4, characterised in that a polarization filter (22) is so disposed in the path of the light between the original (6) and the entry surface (11) that only the light component originating from the diffuse reflection reaches the detector (10).

8.    A system according to any of the preceding claims, <u>characterised</u> <u>in that</u> the length of the entry surface (11) is selected equal to the length of the line to be scanned.

----------------

0073086

FIG. 1

FIG. 5

# FIG.2a

FIG. 2 b

FIG. 2 c

FIG. 3

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| | --- | | H 04 N    1/02B |
| Y | US-A-3 264 407  (HEADD)<br>* Column 5, lines 35-75 * | 1-8 | |
| | --- | | |
| Y | RCA REVIEW, vol. XV, no. 3, September 1954, pages 275-290, Princeton, USA<br>W.H. BLISS et al.: "Facsimile scanning by cathode-ray tube" *<br>Page 285, lines 1-6 * | 1-8 | |
| | --- | | |
| Y | US-A-3 566 119  (LEWIS)<br>* Column 2, lines 3-12; figure 1 * | 4 | |
| | --- | | |
| Y | MUIRHEAD TECHNIQUE, vol. 11, no. 3, July 1957, pages 23,24, Beckenham, G.B.<br>M.S. PEMBROKE: "An improved optical scanning head for facsimile transmitters" * Page 23, left-hand column, lines 25-30 * | 5-7 | **TECHNICAL FIELDS SEARCHED (Int. Cl. 3)**<br><br>H 04 N    1/02B<br>G 06 K    7/10<br>G 01 N   21/89<br>G 02 B    5/14 |
| | --- | | |
| Y | PATENTS ABSTRACTS OF JAPAN, vol. 2, no. 19, 8th February 1978, page 11248E77<br>& JP - A - 52 138 183 (TOKYO SHIBAURA DENKI K.K.) 18-11-1977 | 7 | |
| | --- | | |
| Y | DE-A-2 151 529  (SICK)<br>* Page 5, lines 9-26 * | 5,6 | |
| | ---     -/- | | |

The present search report has been drawn up for all claims

| Place of search<br>THE HAGUE | Date of completion of the search<br>19-11-1982 | Examiner<br>DE ROECK A.F.A. |
|---|---|---|

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO Form 1503. 03.82

European Patent
Office

**EUROPEAN SEARCH REPORT**

**0073086**
Application number

EP 82 20 1039

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl. ³) |
|---|---|---|---|
| A | DE-B-1 102 207 (INTERNATIONAL STANDARD ELECTRIC)<br>* Column 2, line 34 - column 3, line 9 * | 1 | |
| A | US-A-3 617 752 (PAGE)<br>* Column 7, lines 47-52 * | 1 | |

TECHNICAL FIELDS
SEARCHED (Int. Cl. ³)

The present search report has been drawn up for all claims

| Place of search | Date of completion of the search | Examiner |
|---|---|---|
| THE HAGUE | 19-11-1982 | DE ROECK A.F.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82